# EUROPÄISCHE PATENTANMELDUNG

(11) **EP 1 836 987 A1**
(43) Veröffentlichungstag der Anmeldung: **26.09.2007**
(21) Anmeldenummer: 07004817.8
(22) Anmeldetag: 08.03.2007
(51) Int. Cl.: A61C 3/00

(54) **Dentalinstrumentenhandhabungsvorrichtung**

(30) Priorität: 23.03.2006 DE 102006013455
(71) Anmelder: Gebr. Brasseler GmbH & Co. KG, D-32657 Lemgo (DE)
(72) Erfinder: Hagemann, Frank, 32657 Lemgo (DE)
(74) Vertreter: Hager, Thomas Johannes

(57) **Zusammenfassung**

Die Erfindung bezieht sich auf eine Dentalinstrumentenhandhabungsvorrichtung mit einem Einlegeteil 1 und einem Verriegelungsteil 2, wobei das Einlegeteil 1 oder das Verriegelungsteil 2 zumindest eine zu einem Schaft 3 des Dentalinstruments passende Einlegeausnehmung aufweist, welche mit Drehsicherungsmitteln versehen ist, wobei das Verriegelungsteil 2 gelenkig mit dem Einlegeteil 1 verbunden ist und wobei das Verriegelungsteil 2 oder das Einlegeteil 1 mit Riegelmitteln versehen ist, welche im geschlossenen Zustand der Dentalinstrumentenhandhabungsvorrichtung mit dem Dentalwerkzeug in Eingriff bringbar sind.

## Beschreibung

Die Erfindung bezieht sich auf eine Dentalinstrumentenhandhabungsvorrichtung.

Handhabungsvorrichtungen der genannten Art sind auch unter dem Begriff "Thomasschlüssel" bekannt. Sie dienen dazu, einzelne Dentalinstrumente, beispielsweise Fräser, Bohrer oder ähnliches manuell zu handhaben, welche sonst mit einem Winkelstück oder einer ähnlichen Antriebsvorrichtung verbunden sind. Dabei zeigt der Stand der Technik Ausgestaltungen, bei welchen das Schaftende des Dentalinstruments in ein handgriffartiges Bauteil eingeschoben wird. Eine Klemmung oder Verrastung erfolgt entweder durch Reibschluss oder mittels eines O-Rings. Hierbei ergibt sich zum einen das Problem einer axialen Fixierung, zum anderen ist es vielfach nur schwer möglich, das Dentalinstrument anschließend wieder zu lösen, ohne dieses zu beschädigen oder sich beim Abziehen des Instruments an den Schneiden zu verletzen.

Der Erfindung liegt die Aufgabe zugrunde, eine Vorrichtung der Eingangs genannten Art zu schaffen, welche bei einfachem Aufbau und einfacher, kostengünstiger Herstellbarkeit eine sichere Arretierung ermöglicht und gut zu reinigen ist.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass die Handhabungsvorrichtung ein Einlegeteil und ein Verriegelungsteil umfasst, welche dazu dienen, den Schaft des Dentalinstruments aufzunehmen und sowohl axial als auch in Drehrichtung zu sichern. Durch die gelenkige Verbindung des Einlegeteils mit dem Verriegelungsteil kann dieses aufgeklappt bzw. zugeklappt werden. Hierdurch vereinfacht sich die Bedienung erheblich. Weiterhin sind die vorhandenen Hohlräume frei zugänglich, so dass eine problemlose Reinigung erfolgen kann. Ein Verklemmen oder Verkanten des Dentalinstruments ist dabei völlig ausgeschlossen, dieses kann vielmehr jederzeit durch Aufklappen des Einlegeteils und des Verriegelungsteils leicht und ohne die Gefahr einer Verletzung entnommen werden.

Die Drehsicherungsmittel und die Riegelmittel bewirken, dass sich eine zuverlässige Fixierung des Schafts des Dentalinstruments ergibt.

In günstiger Ausgestaltung der Erfindung ist vorgesehen, dass das Einlegeteil eine rohrförmige Führungshülse umfasst, durch welche der Schaft des Dentalinstruments durchführbar ist. Hierdurch wird eine einfache und sichere Zuordnung zwischen dem Einlegeteil und dem Dentalinstrument geschaffen. Zugleich wird eine Verkantung oder ähnliches vermieden, so dass eine axiale Ausrichtung sichergestellt ist.

Die Drehsicherungsmittel umfassen bevorzugterweise eine Mitnahmefläche, gegen welche eine Anfasung des Schafts des Dentalinstruments anlegbar ist. Hierdurch wird eine Drehsicherung oder Rotationssicherung sichergestellt. Die Anfasung des Dentalinstruments ist systembedingt vorhanden, da sie auch zur Übertragung einer Drehkraft bei Verwendung mit einem Winkelstück oder Ähnlichem dient.

Die Riegelmittel umfassen erfindungsgemäß bevorzugterweise einen Steg, welcher in einer Nut des Schafts des Dentalinstruments einbringbar ist, wenn das Einlegeteil und das Verriegelungsteil zusammengeklappt und somit geschlossen werden. Auch die Nut des Dentalinstruments ist systembedingt bereits vorhanden.

Das Einlegeteil und das Verriegelungsteil sind bevorzugterweise im Wesentlichen halbschalenartig ausgebildet, dabei kann es vorteilhaft sein, das Einlegeteil und das Verriegelungsteil entweder an ihren stirnseitigen Enden oder an ihren Seitenbereichen gelenkig miteinander zu verbinden. Günstig ist es dabei auch, wenn zusätzliche Verrastungsmittel vorgesehen sind, um ein Einrasten oder Einschnappen des Einlegeteils und des Verriegelungsteils sicherzustellen.

Im Folgenden wird die Erfindung anhand eines Ausführungsbeispiels in Verbindung mit der Zeichnung beschrieben. Dabei zeigt:
- Fig. 1: eine perspektivische Darstellung im geöffneten Zustand,
- Fig. 2: eine Darstellung im vollständig geöffneten Zustand,
- Fig. 3: eine Detailansicht des Einlegeteils,
- Fig. 4: eine Detailansicht des Verriegelungsteils,
- Fig. 5: eine Seitenansicht im geöffneten Zustand, analog der Darstellung der Fig. 1, und
- Fig. 6: eine Seitenansicht, analog Fig. 5, im geschlossenen Zustand.

Die erfindungsgemäße Dentalinstrumentenhandhabungsvorrichtung umfasst ein schalenartiges Einlegeteil 1, welches mit einem schalenartigen Verriegelungsteil 2 gelenkig verbunden ist. Die Drehachse ist in den Figuren mit dem Bezugszeichen 4 bezeichnet. Sowohl das Einlegeteil als auch das Verriegelungsteil sind jeweils halbschalenartig ausgebildet und weisen entsprechend halbkreisförmige Ausnehmungen auf, um einen Schaft 3 eines im Einzelnen nicht dargestellten Dentalinstruments aufzunehmen.

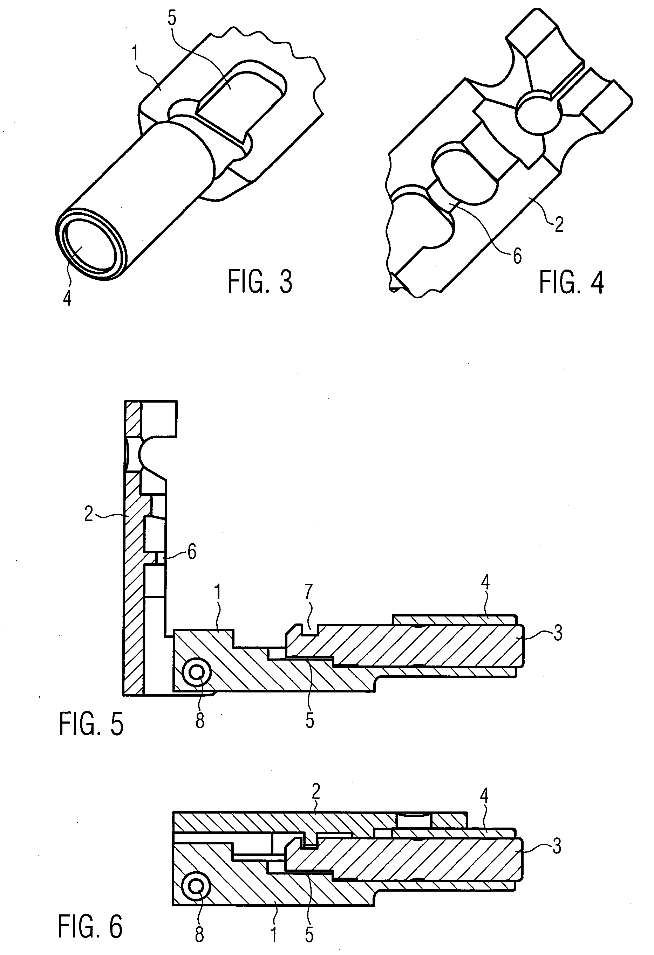

Das Einlegeteil 1 ist einstückig mit einer rohrförmigen Führungshülse 4 versehen, welche, wie insbesondere aus Fig. 3 ersichtlich ist, am freien Ende des Einlegeteils 1 vorgesehen ist und zur Durchführung des Schaftes 3 dient. Hierdurch wird sichergestellt, dass dieser exakt zentriert ist und nicht verkantet werden kann.

Angrenzend an die.Führungshülse 4 ist eine Mitnahmefläche 5 ausgebildet (siehe Fig. 3), welche mit einer Anfasung des Schafts 3 in Anlage bringbar ist, so wie dies die Fig. 5 und 6 zeigen.

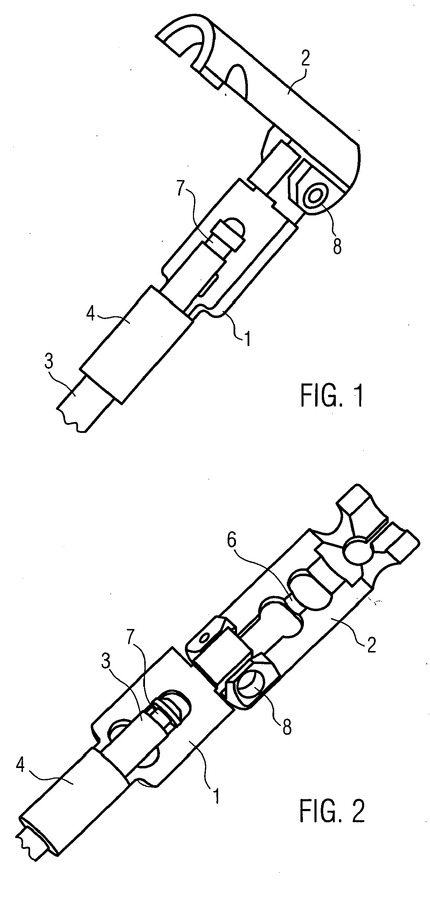

Wie insbesondere aus Fig. 2 ersichtlich ist, weist das Verriegelungsteil 2 einen Steg 6 auf, welcher mit einer halbkreisförmigen Ausnehmung versehen ist, welche in eine Nut 7 des Schaftes 3 einbringbar ist, wenn das Einlegeteil 1 und das Verriegelungsteil 2 in ihre geschlossene Position geklappt werden, so wie dies in Fig. 6 dargestellt ist.

Mittels zusätzlicher Verrastungsmittel, welche beispielsweise mit der Führungshülse 4 in Eingriff bringbar sind, wird ein Verrasten sichergestellt, um ein unbeabsichtigtes Lösen und Aufklappen des Einlegeteils und des Verriegelungsteils 2 zu vermeiden.

Im geschlossenen Zustand der erfindungsgemäßen Dentalinstrumentenhandhabungsvorrichtung ergibt sich somit eine ergonomische Handgriffform, die zusätzlich noch konturiert oder hinsichtlich ihrer Oberflächenbeschaffenheit entsprechend ausgestaltet werden kann. So ist es erfindungsgemäß besonders günstig, diese mit einer Mehrkant-Kontur zu versehen, um eine Drehbewegung auf das Dentalinstrument aufbringen zu können. Eine mehrkantige Kontur ermöglicht es auch, die erfindungsgemäße Vorrichtung mit weiteren Hilfsteilen zu verbinden, beispielsweise einer Drehmomentratsche oder einer Verlängerung für einen maschinellen Antrieb.

### Bezugszeichenliste

- 1: Einlegeteil
- 2: Verriegelungsteil
- 3: Schaft
- 4: Führungshülse
- 5: Mitnahmefläche/Drehsicherungsmittel
- 6: Steg/Riegelmittel
- 7: Nut
- 8: Drehachse

## Patentansprüche

1. Dentalinstrumentenhandhabungsvorrichtung mit einem Einlegeteil (1) und einem Verriegelungsteil (2), wobei das Einlegeteil (1) oder das Verriegelungsteil (2) zumindest eine zu einem Schaft (3) des Dentalinstruments passende Einlegeausnehmung aufweist, welche mit Drehsicherungsmitteln versehen ist, wobei das Verriegelungsteil (2) gelenkig mit dem Einlegeteil (1) verbunden ist und wobei das Verriegelungsteil (2) oder das Einlegeteil (1) mit Riegelmitteln versehen ist, welche im geschlossenen Zustand der Dentalinstrumentenhandhabungsvorrichtung mit dem Dentalwerkzeug in Eingriff bringbar sind.

2. Vorrichtung nach Anspruch 1, **dadurch gekennzeichnet, dass** das Einlegeteil (1) eine rohrförmige Führungshülse (4) umfasst, durch welche der Schaft (3) des Dentalinstruments durchführbar ist.

3. Vorrichtung nach Anspruch 1 oder 2, **dadurch gekennzeichnet, dass** die Drehsicherungsmittel eine Mitnahmefläche (5) umfassen, gegen welche ein Anfasung des Schafts (3) des Dentalinstruments anlegbar ist.

4. Vorrichtung nach einem der Ansprüche 1 bis 3, **dadurch gekennzeichnet, dass** die Riegelmittel zumindest einen Steg (6) umfassen, welcher in eine Nut (7) des Schafts (3) des Dentalinstruments einbringbar ist.

5. Vorrichtung nach einem der Ansprüche 1 bis 4, **dadurch gekennzeichnet, dass** das Einlegeteil (1) und das Verriegelungsteil im Wesentlichen halbschalenartig ausgebildet sind.

6. Vorrichtung nach einem der Ansprüche 1 bis 5, **dadurch gekennzeichnet, dass** das Einlegeteil (1) und das Verriegelungsteil (2) an ihren stirnseitigen Enden gelenkig miteinander verbunden sind.

7. Vorrichtung nach einem der Ansprüche 1 bis 5, **dadurch gekennzeichnet, dass** das Einlegeteil (1) und das Verriegelungsteil (2) an ihren Seitenbereichen gelenkig miteinander verbunden sind.

8. Vorrichtung nach einem der Ansprüche 1 bis 7, **dadurch gekennzeichnet, dass** das Einlegeteil (1) und/oder das Verriegelungsteil (2) mit Verrastungsmitteln versehen sind.

9. Vorrichtung nach einem der Ansprüche 1 bis 8 **dadurch gekennzeichnet, dass** das Einlegeteil (1) und das Verriegelungsteil (2) im geschlossenen Zustand einen Mehrkantquerschnitt aufweisen.

10. Vorrichtung nach einem der Ansprüche 1 bis 8 **dadurch gekennzeichnet, dass** das Einlegeteil (1) und das Verriegelungsteil (2) im geschlossenen Zustand einen ergonomischen Querschnitt aufweisen.
